# EUROPÄISCHE PATENTSCHRIFT

(11) **EP 3 402 020 B1**
(45) Veröffentlichungstag und Bekanntmachung des Hinweises auf die Patenterteilung: **07.07.2021**
(21) Anmeldenummer: 17170281.4
(22) Anmeldetag: 09.05.2017
(51) Int. Cl.: H02G 1/00, H02G 1/12

(54) **KABELBEARBEITUNGSMASCHINE SOWIE VERFAHREN ZUM ABLÄNGEN EINES KABELS**
CABLE PROCESSING MACHINE AND METHOD FOR TRIMMING A CABLE
MACHINE D'USINAGE DE CÂBLE ET PROCÉDÉ DESTINÉ À TRONÇONNER UN CÂBLE

(43) Veröffentlichungstag der Anmeldung: 14.11.2018
(73) Patentinhaber: Schleuniger AG, 3608 Thun (CH)
(72) Erfinder: WALSER, Markus, 3604 Thun (CH)
(74) Vertreter: Patentbüro Paul Rosenich AG

(56) Entgegenhaltungen:
- EP-A1- 1 424 757
- EP-A1- 1 786 072
- EP-A2- 2 028 732
- US-A- 826 077
- US-A- 4 663 822

## Beschreibung

Die Erfindung betrifft eine Kabelbearbeitungsmaschine nach dem Anspruchs 1, sowie ein Verfahren zum Ablängen eines Kabels nach dem Anspruch 3.

Das Dokument EP1786072 offenbart eine Maschine gemäß dem Oberbegriff des Anspruchs 1. Steigende Anforderungen an den Datentransfer erhöhen auch die Ansprüche an die Bearbeitung von Kabeln, insbesondere von Mikrokoaxial- und Koaxialkabeln, die beispielsweise für Antennenkomponenten benötigt werden. Besonders kritisch sind dabei die Einhaltung von Längentoleranzen und der Transport der Kabel zwischen den einzelnen Bearbeitungsschritten. Daher werden derartige Produkte meist mit voll automatisierten und hochflexiblen Maschinenplattformen produziert bzw. bearbeitet. Nachdem das Kabel geschnitten wurde, wird das Kabelende während sämtlicher Prozesse durch einen einzigen Greifer gehalten. Es muss somit nicht übergeben werden, behält exakt seine Position und wird deshalb den einzelnen Stationen wie beispielsweise Abisoliereinheiten oder Crimp-Pressen mit maximaler Positionsgenauigkeit zugeführt. Die Stationen selbst sind speziell für die hohen Anforderungen angepasst. Nach der automatischen Abarbeitung aller Prozessschritte wird auch das Ablegen des fertigen Kabels optimiert, um die Kabelenden nicht zu beschädigen. Nachteilig an bisher bekannten Lösungen ist, dass die Genauigkeit aufgrund des Durchhanges der Kabel eine relativ grosse Ungenauigkeit einbrachte.

Aufgabe der vorliegenden Erfindung ist es somit, eine Vorrichtung zu schaffen, welche die vorgenannten Nachteile nicht aufweist und insbesondere eine höhere Längengenauigkeit der gefertigten Kabel gewährleistet.

Die Aufgabe wird durch die Merkmale der unabhängigen Ansprüche 1 und 3 gelöst. Vorteilhafte Weiterbildungen sind in den Figuren und in den abhängigen Patentansprüchen dargelegt.

Eine Kabelbearbeitungsmaschine zur Anwendung gemäss der Erfindung weist zumindest eine Handhabungseinheit für ein zu bearbeitendes Kabel auf. Typischerweise ist diese Handhabungseinheit als Schwenkarm bzw. Transport- und Schwenkeinheit ausgebildet, mit welcher ein Kabelabschnitt, vorzugsweise ein Kabelende, entlang einer Kreisbahn zu verschiedenen Bearbeitungsstationen verbracht werden kann. Die Handhabungseinheit könnte aber auch als frei programmierbarer Roboterarm ausgeführt sein. Mittels einer Zustelleinheit bzw. PushPull-Achse kann der Kabelabschnitt an der jeweiligen Station in einer Linearbewegung genau für die Bearbeitungsschritte passend zugestellt werden. Weiters ist zumindest eine Bearbeitungsstation für das Kabel vorhanden, wobei das Kabel mittels der Handhabungseinheit von und zu jeder Bearbeitungsstation verbracht werden kann. Zumindest eine Bearbeitungsstation weist eine Schneideinheit zum Ablängen des Kabels auf.

Gemäss der Erfindung ist eine derartige Maschine dadurch gekennzeichnet, dass die Kabelbearbeitungsmaschine einen Lineareinzug mit einem Lineareinzugsgreifer für das Kabel aufweist und die Handhabungseinheit einen ersten Transportgreifer aufweist, wobei der erste Transportgreifer und der Lineareinzugsgreifer in eine Relativposition verfahrbar sind, in welcher das Kabel mit einer vorgebbaren Kraft gespannt gehalten ist.

Durch das Strecken des Kabels mit definierter Kraft wird der Durchhang des Kabels deutlich und auf einen wiederholgenauen Wert reduziert. Ebenso werden Krümmungen im Kabel, wie sie beim Abwickeln, beim Zuführen oder Verarbeiten mit etwa einem Schwenkarm entstehen, reduziert. Beides erlaubt eine höhere Längengenauigkeit zu erreichen, wie sie z.B. bei Hochfrequenzanwendungen erforderlich ist, wo genaue Phasenlagen und Laufzeiten sichergestellt werden müssen.

Die Kraft für die Streckung des Kabels könnte alternativ auch durch eine vorgelagerte Haltebremse mit definierter Zugkraft z.B. mit einem druckgeregelten Zylinder erfolgen.

Gemäß der Erfindung weist die Handhabungseinheit einen zweiten Transportgreifer auf, welcher in eine Position zwischen dem ersten Transportgreifer und dem Lineareinzugsgreifer verfahrbar ist.

Eine weitere Ausführungsform der Erfindung ist dadurch gekennzeichnet, dass die Schneideinheit zwischen dem ersten Transportgreifer und dem Lineareinzugsgreifer positioniert ist, vorzugsweise zwischen dem ersten Transportgreifer und dem zweiten Transportgreifer.

Ein erfindungsgemässes Verfahren zum Ablängen eines Kabels geht davon aus, dass das Kabel an zwei Positionen geklemmt und zwischen diesen Positionen durchgeschnitten wird.

Gemäss der Erfindung ist ein derartiges Verfahren dadurch gekennzeichnet, dass das Kabel in einem Lineareinzugsgreifer geklemmt und in Richtung seiner Längsachse in eine Position eingezogen wird, in welcher es im Abstand vom Lineareinzugsgreifer in einem ersten Transportgreifer geklemmt wird, wobei nach dem Klemmen das Kabel zwischen dem Lineareinzugsgreifer und dem ersten Transportgreifer mit einer vorgebbaren Kraft gespannt wird. Damit sind die bereits im Zusammenhang mit der Kabelbearbeitungsmaschine erläuterten Vorteile zu erzielen.

Gemäß der Erfindung wird dabei das Kabel zusätzlich an einer Position zwischen dem Lineareinzugsgreifer und dem ersten Transportgreifer mittels eines zweiten Transportgreifers geklemmt und anschliessend zwischen den beiden Transportgreifern durchtrennt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine schematische Übersichts-Darstellung der mechanischen Komponenten einer vorteilhaften Ausführungsform der Erfindung,
- Fig. 2: die Komponenten der Fig. 1 zu Beginn des Einzugs-Vorganges,
- Fig. 3: die Positionen während des Kabeleinzugs,
- Fig. 4: die gegenseitigen Positionen der Komponenten für die erfindungswesentliche Streckfunktion des Kabels,
- Fig. 5: die Komponenten während der Übernahme durch den zweiten Schwenkarm,
- Fig. 6: die Positionen für die Freigabe des Lineareinzuges, und
- Fig. 7: die Komponenten in ihren Positionen während des Schneide-Vorganges.

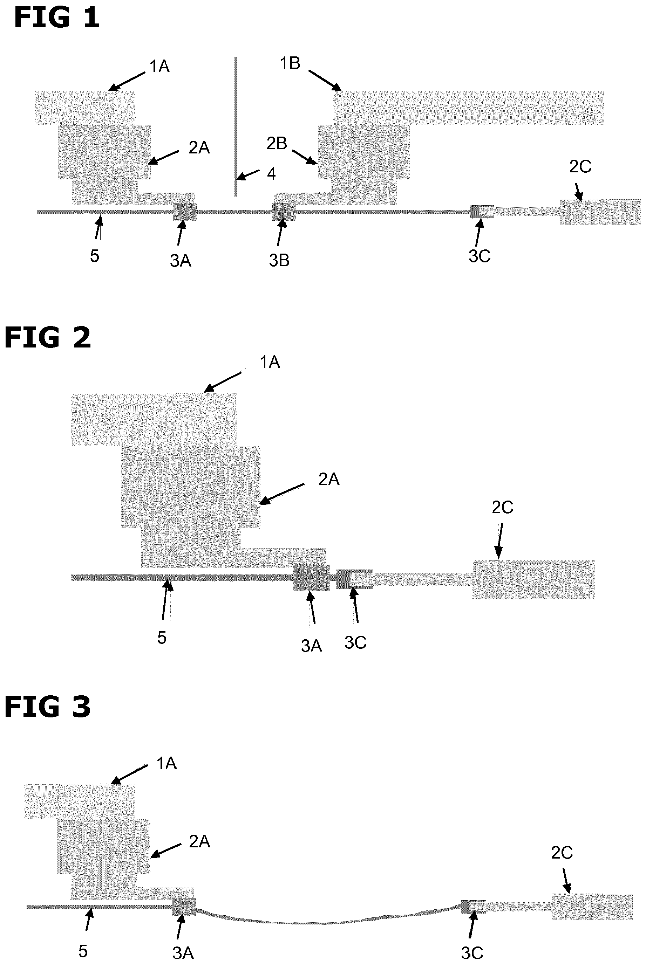

Fig. 1 zeigt eine Übersicht der beteiligten mechanischen Komponenten, die Teile einer Kabelbearbeitungsmaschine sind. Jede Handhabungseinheit für das Kabel 5 ist dabei als Schwenkarmeinheit bzw. Transport- und Schwenkeinheit ausgebildet. Eine PushPull Achse 1A eines Schwenkarms einer ersten Seite der Maschine gestattet eine lineare Bewegung der daran befestigten Komponenten. An dieser Achse 1A ist im dargestellten Ausführungsbeispiel der Maschine ein Schwenkarm 2A angebracht, mittels welchen Arms 2A ein daran gehaltener Abschnitt des Kabels 5 entlang einer Kreisbahn verschwenkt werden kann. Damit kann dieser Abschnitt beispielsweise unterschiedlichen Bearbeitungsstationen zugeführt und davon wegbewegt werden. Gehalten wird das Kabel 5 dabei von einem ersten Transportgreifer 3A der ersten Seite der Maschine.

Eine zweite Seite der Maschine ist mit genau entsprechenden Komponenten ausgestattet. Ein weiterer Schwenkarm 2B der zweiten Seite der Maschine ist auf einer zweiten PushPull Achse 1B befestigt. Der zweite Schwenkarm 2B trägt wieder einen zweiten Transportgreifer 3B, mit dem ein Kabelabschnitt geklemmt werden kann.

Im Bereich der zweiten Seite der Maschine ist weiters ein Lineareinzug 2C angeordnet, mit einem linear beweglichen Lineareinzugsgreifer 3C. Die Bewegungsrichtung des Lineareinzugsgreifers 3C liegt dabei parallel und insbesondere koaxial zur Bewegungsrichtung des ersten Transportgreifers 3A, wenn dieser das Kabel 5 nach dem Einziehen geklemmt hält und mittels der PushPull Achse 1A bewegt wird.

Mit 4 ist schliesslich das Sägeblatt einer Kreissäge zum Ablängen des Kabels 5 bezeichnet. Diese Schneideinheit, insbesondere das Sägeblatt 4, befindet sich zwischen den beiden Transportgreifern 3A, 3B.

Fig. 2 stellt die Verhältnisse bei Start des Einzuges des Kabels 5 in die Kabelbearbeitungsmaschine dar. Die PushPull Achse des Schwenkarms 1A befindet sich auf Übergabe Position. Der Lineareinzug 2C hält die Kabelspitze mit dem Lineareinzugsgreifer 3C und der Greifer 2A der ersten Seite der Maschine geht auf Führungsposition, sodass das Kabel 5 in den Greiferbacken 3A lose geführt ist.

In Fig. 3 ist der Kabeleinzug gezeigt. Der Lineareinzug 2C zieht das Kabel 5 auf die gewünschte Länge. Danach schliesst der Greifer 2A der ersten Seite. Wegen Durchhang und Kabelkrümmungen stimmt die Kabellänge jedoch nicht korrekt. Daher wird in einem nächsten Schritt das Kabel gestreckt.

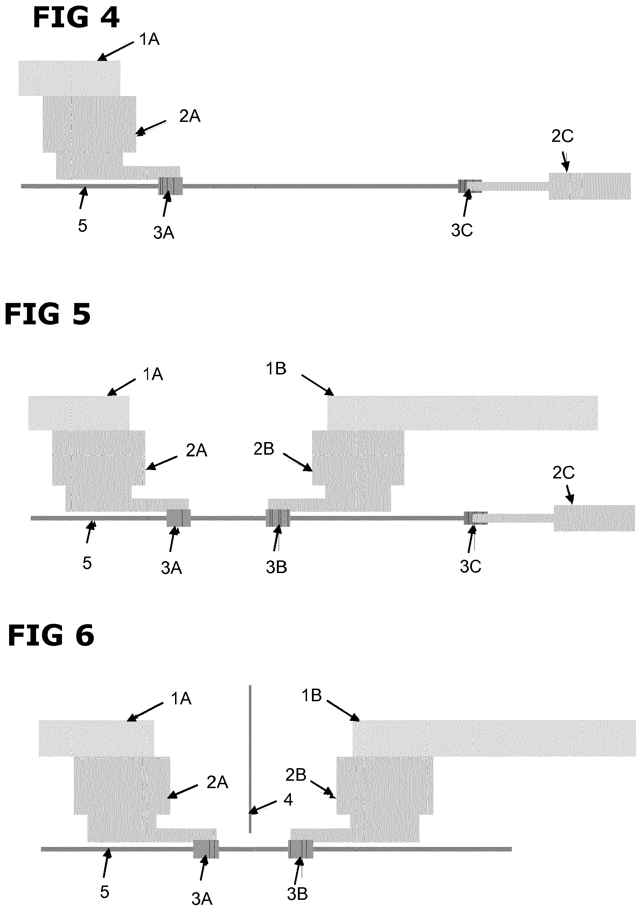

Fig. 4 zeigt die Verhältnisse während dieser Streckfunktion. Der Greifer 2A der ersten Seite ist in geschlossenem Zustand und die Greiferbacken 3A halten das Kabel. Die PushPull Achse 1A des Schwenkarms der ersten Seite der Maschine wird in den kraftgesteuerten Modus umgeschaltet. Mit einstellbarer definierter Kraft zieht die PushPull Achse 1A das Kabel zurück, das Kabel wird gestreckt.

Anschliessend erfolgt vorzugsweise und wie in Fig. 5 dargestellt die Positionsübernahme mit dem Schwenkarm Seite 2. Dazu wird der Schwenkarm 1B der zweiten Seite der Maschine in die Kabelachse eingeschwenkt und schliesst den Greifer 2B an definierter Position. Das Kabel wird nun von allen Greiferbacken 3A, 3B und 3C gehalten. Das Einschwenken kann auch parallel zum Ablauf des in Fig. 3 gezeigten Kabeleinzugs und der Streckfunktion gemäss Fig. 4 erfolgen.

Fig. 6 zeigt die Freigabe des Lineareinzugs, wobei die PushPull Achse 1B des Schwenkarms der zweiten Seite der Maschine das Kabel an einer Position hält, die gegenüber beispielsweise dem Sägeblatt 4 einer Kreissäge definiert ist. Dadurch ist auch die ganze Kabellänge definiert und der Lineareinzug 2C kann bei Bedarf das Kabel loslassen und auf eine Warteposition gehen.

Die PushPull Achse 1A der ersten Seite kann bei grossen Streckfahrwegen den Greifer 2A öffnen und auf die gewünschte Kabelüberhang-Position vorfahren. Bei kleinen Rückzugswegen kann auch direkt die Position vom Rückzug für die weitere Verarbeitung verwendet werden.

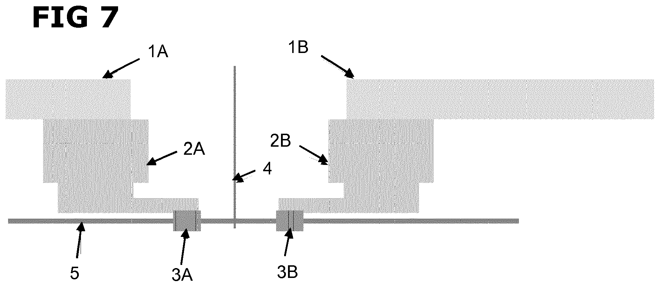

Letztlich erfolgt das Schneiden des Kabels 5, wie in Fig. 7 dargestellt. Mit dem Sägeblatt 4 der Kreissäge wird das Kabel 5 getrennt und somit auf eine reproduzierbar genaue Länge zugeschnitten.

Weitere Varianten und Ausführungsbeispiele der Erfindung sind möglich, insbesondere für die Handhabungseinheit(en) für das Kabel. Hier können Schwenkarmeinheiten und Lineartransporteinheiten in beliebiger Anordnung und auf beliebiger Seite der Maschine kombiniert aber jedenfalls durch den Lineareinzug ergänzt werden.

### Bezugszeichenliste

- 1A: PushPull Achse des Schwenkarms der ersten Seite
- 1B: PushPull Achse des Schwenkarms der zweiten Seite
- 2A: Schwenkarm Greifer der ersten Seite der Maschine
- 2B: Schwenkarm Greifer der zweiten Seite der Maschine
- 2C: Lineareinzug Greifer
- 3A: Greiferbacke des Schwenkarms der ersten Seite
- 3B: Greiferbacke des Schwenkarms der zweiten Seite
- 3C: Greiferbacke vom Lineareinzug
- 4: Kreissäge
- 5: Kabel

## Patentansprüche

1. Kabelbearbeitungsmaschine mit zumindest einer Handhabungseinheit (1A, 2A, 3A; 1B, 2B, 3B) für ein zu bearbeitendes Kabel (5), mit zumindest einer Bearbeitungsstation für das Kabel (5), wobei das Kabel (5) mittels der Handhabungseinheit (1A, 2A, 3A; 1B, 2B, 3B) von und zu jeder Bearbeitungsstation verbracht werden kann, wobei zumindest eine Bearbeitungsstation eine Schneideinheit (4) zum Ablängen des Kabels (5) aufweist, wobei die Kabelbearbeitungsmaschine einen Lineareinzug (2C) mit einem Lineareinzugsgreifer (3C) für das Kabel (5) aufweist und die Handhabungseinheit (1A, 2A, 3A; 1B, 2B, 3B) einen ersten Transportgreifer (3A) aufweist, wobei der erste Transportgreifer (3A) und der Lineareinzugsgreifer (3C) in eine Relativposition verfahrbar sind, in welcher das Kabel (5) mit einer vorgebbaren Kraft gespannt gehalten ist, **dadurch gekennzeichnet, dass** die Handhabungseinheit (1A, 2A, 3A; 1B, 2B, 3B) einen zweiten Transportgreifer (3B) aufweist, welcher in eine Position zwischen dem ersten Transportgreifer (3A) und dem Lineareinzugsgreifer (3C) verfahrbar ist.

2. Kabelbearbeitungseinheit nach Anspruch 1, **dadurch gekennzeichnet, dass** die Schneideinheit (4) zwischen dem ersten Transportgreifer (3A) und dem Lineareinzugsgreifer (3C) positioniert ist, vorzugsweise zwischen dem ersten Transportgreifer (3A) und dem zweiten Transportgreifer (3B).

3. Verfahren zum Ablängen eines Kabels, wobei das Kabel (5) an zwei Positionen geklemmt und zwischen diesen Positionen durchgeschnitten wird, wobei das Kabel (5) in einem Lineareinzugsgreifer (3C) geklemmt und in Richtung seiner Längsachse in eine Position eingezogen wird, in welcher es im Abstand vom Lineareinzugsgreifer (3C) in einem ersten Transportgreifer (3A) geklemmt wird, wobei nach dem Klemmen das Kabel (5) zwischen dem Lineareinzugsgreifer (3C) und dem ersten Transportgreifer (3A) mit einer vorgebbaren Kraft gespannt wird, **dadurch gekennzeichnet, dass** das Kabel (5) zusätzlich an einer Position zwischen dem Lineareinzugsgreifer (3C) und dem ersten Transportgreifer (3A) mittels eines zweiten Transportgreifers (3B) geklemmt und anschliessend zwischen den beiden Transportgreifern (3A, 3B) durchtrennt wird.

## Claims

1. A cable processing machine having at least one handling unit (1A, 2A, 3A; 1B, 2B, 3B) for a cable (5) to be processed, having at least one workstation for the cable (5), wherein the cable (5) can be moved from and to each workstation by means of the handling unit (1A, 2A, 3A; 1B, 2B, 3B), wherein at least one workstation has a cutting unit (4) for cutting the cable (5) to length, wherein the cable processing machine has a linear infeed (2C) with a linear infeed gripper (3C) for the cable (5) and the handling unit (1A, 2A, 3A; 1B, 2B, 3B) has a first transport gripper (3A), wherein the first transport gripper (3A) and the linear infeed gripper (3C) can be moved into a relative position, in which the cable (5) is held in a tensioned manner with a predeterminable force, **characterized in that** the handling unit (1A, 2A, 3A; 1B, 2B, 3B) has a second transport gripper (3B), which can be moved into a position between the first transport gripper (3A) and the linear infeed gripper (3C).

2. The cable processing machine according to Claim 1, **characterized in that** the cutting unit (4) is positioned between the first transport gripper (3A) and the linear infeed gripper (3C), preferably between the first transport gripper (3A) and the second transport gripper (3B).

3. A method for cutting a cable to length, wherein the cable (5) is clamped at two positions and cut through between these positions, wherein the cable (5) is clamped in a linear infeed gripper (3C) and pulled in the direction of its longitudinal axis into a position, in which it is clamped, at a distance from the linear infeed gripper (3C), in a first transport gripper (3A), wherein, after the clamping, the cable (5) is tensioned with a predeterminable force between the linear infeed gripper (3C) and the first transport gripper (3A), **characterized in that** the cable (5) is additionally clamped by means of a second transport gripper (3B), at a position between the linear infeed gripper (3C) and the first transport gripper (3A), and subsequently cut between the two transport grippers (3A, 3B).

## Revendications

1. Machine d'usinage de câbles, comprenant au moins une unité de manipulation (1A, 2A, 3A ; 1B, 2B, 3B) d'un câble (5) à usiner, au moins un poste d'usinage du câble (5), au moyen de l'unité de manipulation (1A, 2A, 3A ; 1B, 2B, 3B), le câble (5) pouvant être déplacé à partir de et vers chaque poste d'usinage, au moins un poste d'usinage comportant une unité de coupe (4), destinée à couper en longueur le câble (5), la machine d'usinage de câbles comportant un rétracteur linéaire (2C) avec un grappin de rétracteur linéaire (3C) pour le câble (5) et l'unité de manipulation (1A, 2A, 3A ; 1B, 2B, 3B) comportant un premier grappin de transport (3A), le premier grappin de transport (3A) et le grappin de rétracteur linéaire (3C) étant déplaçables dans une position relative dans laquelle le câble (5) est maintenu en tension avec une force prédéfinissable, **caractérisée en ce que** l'unité de manipulation (1A, 2A, 3A ; 1B, 2B, 3B) comporte un deuxième grappin de transport (3B) qui est déplaçable dans une position entre le premier grappin de transport (3A) et le grappin de rétracteur linéaire (3C).

2. Machine d'usinage de câbles selon la revendication 1, **caractérisée en ce que** l'unité de coupe (4) est positionnée entre le premier grappin de transport (3A) et le grappin de rétracteur linéaire (3C), de préférence entre le premier grappin de transport (3A) et le deuxième grappin de transport (3B).

3. Procédé, destiné à couper en longueur un câble, lors duquel l'on enserre le câble (5) sur deux positions et on le sectionne entre lesdites positions, le câble (5) étant enserré dans un grappin de rétracteur linéaire (3C) et rétracté dans la direction de son axe longitudinal dans une position dans laquelle il est enserré avec un écart par rapport au grappin de rétracteur linéaire (3C) dans un premier grappin de transport (3A), après avoir été enserré, le câble (5) étant tendu entre le grappin de rétracteur linéaire (3C) et le premier grappin de transport (3A) avec une force prédéfinissable, **caractérisé en ce que** le câble (5) est enserré additionnellement dans une position entre le grappin de rétracteur linéaire (3C) et le premier grappin de transport (3A) au moyen d'un deuxième grappin de transport (3B) et sectionné ensuite entre les deux grappins de transport (3A, 3B).
